(19) Europäisches Patentamt
European Patent Office
Office européen des brevets

(11) EP 3 555 196 B1

(12) FASCICULE DE BREVET EUROPEEN

(45) Date de publication et mention de la délivrance du brevet:
**05.04.2023 Bulletin 2023/14**

(21) Numéro de dépôt: **17828970.8**

(22) Date de dépôt: **19.12.2017**

(51) Classification Internationale des Brevets (IPC):
***C08L 9/00*** (2006.01) ***C08L 9/02*** (2006.01)
***C08L 21/00*** (2006.01)

(52) Classification Coopérative des Brevets (CPC):
(C-Sets disponibles)
**C08F 279/02; B29B 7/005; C08C 19/22;**
**C08F 136/08; C08K 3/04; C08K 3/36; C08L 51/04**

(Cont.)

(86) Numéro de dépôt international:
**PCT/FR2017/053678**

(87) Numéro de publication internationale:
**WO 2018/115704 (28.06.2018 Gazette 2018/26)**

(54) **PROCEDE DE PREPARATION D'UN ELASTOMERE DIENIQUE MODIFIE PAR UN COMPOSE 1,3-DIPOLAIRE**

VERFAHREN ZUR HERSTELLUNG EINES DIENELASTOMERS MIT EINER 1,3-DIPOLAREN VERBINDUNG

METHOD FOR PRODUCING A DIENE ELASTOMER MODIFIED WITH A 1,3-DIPOLAR COMPOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2016 FR 1662764**

(43) Date de publication de la demande:
**23.10.2019 Bulletin 2019/43**

(73) Titulaire: **Compagnie Générale des Etablissements Michelin**
**63000 Clermont-Ferrand (FR)**

(72) Inventeur: **SAID-DIATTA, Rokhiyatou**
**63040 Clermont Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 492 550**
**CN-B- 1 986 635**
**JP-A- 2004 137 396**
**US-A1- 2013 123 418**
**US-A1- 2015 322 183**
**US-A1- 2016 264 753**
**US-B2- 8 669 339**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08F 279/02, C08F 212/26;**
**C08K 3/04, C08L 15/00;**
**C08K 3/36, C08L 15/00**

## Description

La présente invention concerne un procédé de préparation d'un élastomère diénique modifié par réaction de greffage d'un composé 1,3-dipolaire.

La modification d'élastomère diénique par un composé 1,3-dipolaire est connue. La modification a lieu par une réaction de cycloaddition [3+2] du composé 1,3-dipolaire sur les doubles liaisons des unités diéniques de l'élastomère. Très souvent, le composé 1,3-dipolaire utilisé est un composé qui outre le dipôle porte une fonction chimique, ce qui permet de greffer des fonctions chimiques pendantes sur l'élastomère. De tels élastomères modifiés peuvent être destinés pour une utilisation dans des compositions de caoutchouc pour pneumatique. Ces réactions de modification peuvent être conduites en solution ou en masse, par exemple dans un mélangeur interne comme cela est par exemple décrit dans les documents WO 2012007442, WO 2015059271, WO 2015177105. Lorsque l'élastomère modifié est destiné à être utilisé dans une composition de caoutchouc comprenant une charge renforçante et que plusieurs dizaines ou centaines de kilogrammes d'élastomère diénique sont modifiés dans un mélangeur interne par malaxage thermomécanique de l'élastomère diénique et du composé 1,3-dipolaire, la réaction de modification est suivie de l'ajout et de l'incorporation de la charge renforçante, et éventuellement des autres ingrédients de la composition. On mélange l'ensemble par un malaxage thermomécanique dans le mélangeur interne, puis on procède à la tombée du mélange chargé pour le récupérer. A la tombée, on constate que le mélange chargé tombe en poudre, ce qui rend très difficile l'utilisation du mélange chargé pour les étapes ultérieures de préparation de la composition de caoutchouc. On constate aussi que le rendement de greffage est fluctuant et peut atteindre des valeurs relativement faibles.

Les Demanderesses poursuivant leurs efforts ont trouvé un nouveau procédé en masse de modification qui permet de résoudre les problèmes mentionnés ci-dessus.

L'invention a donc pour objet un procédé de préparation d'un élastomère diénique modifié par un composé 1,3-dipolaire, caractérisé en ce qu'il comprend les étapes suivantes :

a. On mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère diénique,

b. On extrude l'élastomère diénique modifié.

Un autre objet de l'invention est un procédé de préparation d'une composition de caoutchouc à base d'un élastomère diénique modifié par un composé 1,3-dipolaire et d'une charge renforçante qui comprend les étapes suivantes :

i. On mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère diénique,

ii. On extrude l'élastomère diénique modifié,

iii. On incorpore une charge renforçante à l'élastomère diénique modifié issu de l'étape ii) par un malaxage thermomécanique dans un mélangeur interne.

L'invention a aussi pour objet un granulé d'élastomère diénique modifié par une réaction de greffage d'un composé 1,3-dipolaire susceptible d'être obtenu par le procédé conforme à l'invention dans lequel l'étape b) est suivie d'une étape de granulation de l'élastomère diénique modifié.

Un autre objet de l'invention est l'utilisation de granulés conformes à l'invention dans une composition de caoutchouc comprenant une charge renforçante.

### 1. DESCRIPTION DETAILLEE DE L'INVENTION :

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors

des différentes phases de fabrication de la composition destinée à la fabrication de pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les composés 1,3-dipolaires.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces définitions étant données, on entend plus particulièrement par élastomère diénique susceptible d'être utilisé dans les compositions conformes à l'invention :

(a) - tout homopolymère d'un monomère diène conjugué, notamment tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - tout copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - tout copolymère obtenu par copolymérisation d'un ou plusieurs diènes conjugués avec l'éthylène, une $\alpha$-monooléfine aliphatique acyclique ayant 3 à 18 atomes de carbone ou leur mélange comme par exemple ceux décrits dans le document WO 2005028526, WO 2004035639 et WO 2007054224 ;

Préférentiellement, l'élastomère diénique est choisi dans le groupe constitué par les polybutadiènes, les polyisoprènes, les copolymères de butadiène, les copolymères d'isoprène et leurs mélanges. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène et de butadiène. Plus préférentiellement, l'élastomère diénique est un polyisoprène comprenant plus de 90% en mole de liaison 1,4-cis. Peuvent convenir tout particulièrement les polyisoprènes de synthèse ayant une telle microstructure.

L'élastomère diénique contient de préférence un antioxydant. L'antioxydant peut être tout antioxydant, notamment tout antioxydant utilisé conventionnellement pour protéger les élastomères diéniques. L'antioxydant est généralement introduit dans l'élastomère dans le procédé de synthèse de l'élastomère, le plus souvent pendant ou après la réaction de terminaison des chaînes élastomères. Bien entendu, l'antioxydant peut être un mélange de plusieurs antioxydants. Par exemple, on peut citer les antioxydants appartenant à la famille des phénols, des amines, des quinones, des tocophérols, des tocotriénols, des thiols. A titre d'exemple, conviennent les dérivés de la paraphénylènediamine, encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1,4-diméthyl-pentyl)-p-phénylène-diamine, la N,N'-diaryl-p-phénylène diamine ("DTPD"), la diaryl-p-phénylène-diamine ("DAPD"), la 2,4,6-tris-(N-1,4-dimethylpentyl-p-phenylenediamino)-1,3,5-triazine, et les mélanges de telles diamines, les dérivés de la quinoléine ("TMQ") tels que par exemple la 1,2-dihydro-2,2,4-triméthylquinoléine et la 6-éthoxy-1,2-dihydro-2,2,4- triméthyl-quinoléine, les dérivés des phénols, notamment ceux du crésol, tels que le 2,2'-méthylènebis(6-tert-butyl-4-méthylphénol) connu sous le nom de « AO2246 », les copolymères de dicyclopentadiène et de para-crésol, en particulier l'antioxydant « Struktol LA229 » de Schill & Seilacher, les dérivés des diphénylamines ou triphénylamines substituées, telles que décrites par exemple dans les demandes WO 2007/121936, WO 2008/055683 et WO2009/138460, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine, la 4,4',4"-tris(I,3-diméthylbutylamino)triphénylamine, la 4,4',4"-tris(1,4-diméthylpentylamino)-triphénylamine.

La présence d'antioxydant dans l'élastomère diénique permet de minimiser, voire de limiter les évolutions de macrostructure de l'élastomère diénique qui pourraient découler du passage de l'élastomère diénique dans l'extrudeuse. Pour limiter le coût lié à l'utilisation de l'antioxydant, il est préférable d'utiliser le moins possible d'antioxydant. Typiquement, le taux d'antioxydant est compris entre 1 et 20 pce.

L'élastomère diénique peut être un élastomère étendu. On entend par élastomère étendu un élastomère auquel un plastifiant a été ajouté, notamment de façon conventionnelle par exemple dans le procédé de finition de l'élastomère diénique. A titre de plastifiant, on peut citer les huiles d'extension traditionnellement utilisées dans les compositions de caoutchouc pour pneumatique, telles que les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic*

*Extract oils*), les huiles minérales.

Le terme composé 1,3-dipolaire est compris selon la définition donnée par IUPAC. Le dipôle du composé 1,3-dipolaire peut être un oxyde de nitrile, une nitrone ou un nitrile imine, de préférence est un oxyde de nitrile.

Lorsque le dipôle du composé 1,3-dipolaire est un oxyde de nitrile, le composé 1,3-dipolaire comprend de préférence un noyau benzénique qui est substitué par le dipôle. De manière plus préférentielle, le noyau benzénique est aussi substitué en ortho du dipôle. Ces modes de réalisation préférentiels permettent d'optimiser encore davantage le rendement de greffage. En effet, la présence du noyau benzénique dans la structure du composé 1,3-dipolaire, en particulier substitué en ortho, confère une meilleure stabilité du composé 1,3-dipolaire au stockage avant sa mise en contact avec l'élastomère diénique.

Le composé 1,3-dipolaire outre le dipôle peut porter une autre fonction chimique. A titre de fonction chimique, on peut citer les groupes pouvant s'associer par liaisons hydrogène comme ceux décrits dans le document WO 2012007441, tout particulièrement les groupes contenant un hétérocycle diazoté et carbonylé à 5 membres tel que le groupe 2-oxoimidazolidin-1-yle, les groupes pouvant interagir avec la surface d'une charge renforçante usuellement utilisée dans les compositions de caoutchouc pour pneumatique telle que des groupes imidazole, ester, oxazoline, thiazoline, alcoxysilane et allylétain comme décrits respectivement dans les documents WO 2015059271, WO2015177105 et WO 2006045088.

La quantité de composé 1,3-dipolaire introduite dans le mélangeur interne, exprimée en mole pour 100 moles de motifs d'élastomère, peut varier dans une large mesure, par exemple dans une gamme comprise entre 0.01 et 50, de préférence de 0.01 à 3. Elle est indexée sur le rendement de greffage et le taux de greffage souhaité sur l'élastomère diénique qui dépend de l'application envisagée de l'élastomère diénique modifié.

Le procédé conforme à l'invention a pour caractéristique essentielle de comprendre une étape a) au cours de laquelle on mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère. Comme le malaxage de l'élastomère diénique dans le mélangeur interne s'accompagne d'un échauffement de l'élastomère, l'élévation de la température de mélangeage permet au composé 1,3-dipolaire de réagir sur les doubles liaisons des unités diéniques de l'élastomère par réaction de cycloaddition [3+2]. De préférence, on malaxe l'élastomère diénique et le composé 1,3-dipolaire dans le mélangeur interne jusqu'à à atteindre une température maximum de mélangeage allant de 110 à 180°C, préférentiellement comprise entre 140 et 170°C. Il est préférable de malaxer jusqu'à une température de mélangeage qui n'excède pas 170°C. Une température de mélangeage excédant 170°C pourrait entraîner une évolution de la macrostructure de l'élastomère diénique, même au préalable antioxydé, ce qui n'est pas souhaitable pour certaines applications dans lesquelles on souhaite utiliser l'élastomère diénique modifié. De telles conditions de malaxage permettent de greffer le composé 1,3-dipolaire avec un bon rendement et rapidement, par exemple en moins de 3 minutes.

On appelle température de mélangeage la température de l'élastomère diénique, modifié ou non, dans le mélangeur interne. Le mélangeur étant composé d'une cuve dans laquelle a lieu le malaxage, la cuve a typiquement une température choisie dans une gamme allant de 30 à 70°C avant d'introduire l'élastomère diénique et le composé 1,3-dipolaire dans le mélangeur interne.

La température maximum de mélangeage étant atteinte, on procède de façon traditionnelle à la tombée pour récupérer l'élastomère diénique modifié hors du mélangeur interne. Ensuite, on procède à l'étape b) au cours de laquelle on extrude l'élastomère diénique, typiquement pour le mettre en forme.

Pour procéder à l'étape b), on introduit l'élastomère diénique modifié dans la zone d'alimentation de l'extrudeuse de façon conventionnelle. L'élastomère diénique modifié peut se présenter sous toute forme dans la mesure où elle est adaptée à une alimentation par une trémie qui équipe l'extrudeuse. Par exemple, l'élastomère diénique modifié peut être calandré pour se présenter sous la forme de bandelette ou déchiqueté en petits morceaux pour alimenter l'extrudeuse. L'extrudeuse peut être une extrudeuse monovis, c'est dire comportant une vis sans fin, ou être une extrudeuse bivis, c'est-à-dire comportant un jeu de deux vis sans fin. Elle comprend de façon traditionnelle un fourreau. L'extrusion étant une opération de mise en forme, la température de consigne de l'extrudeuse de préférence n'excède pas 40°C. On entend par température de consigne de l'extrudeuse la température de consigne appliquée à l'intérieur de l'extrudeuse, en particulier au fourreau. A la sortie de l'extrudeuse, après passage dans la filière, l'élastomère diénique modifié est de préférence découpé en granulés selon une étape de granulation bien connue de l'homme du métier. Tout dispositif connu pour découper les élastomères diéniques dans les procédés de fabrication des caoutchoucs synthétiques peut être utilisé, tel qu'un marteau ou un granulateur. Il est disposé après la filière. Pour pouvoir conserver les granulés sans qu'ils ne s'agglomèrent, on peut talquer les granulés, puis si besoin les mettre dans un conditionnement adapté pour pouvoir les transporter, les stocker ou les manipuler.

Les granulés susceptibles d'être obtenus selon le procédé conforme à l'invention peuvent être utilisés à titre d'élastomère dans une composition de caoutchouc comportant une charge renforçante.

La charge renforçante peut être tout type de charge dite renforçante, connue pour ses capacités à renforcer une composition de caoutchouc utilisable pour la fabrication de pneumatiques, par exemple une charge organique telle

que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le procédé de préparation de la composition de caoutchouc a pour caractéristique essentielle de comprendre les étapes a) et b) définies selon l'un quelconque des modes de réalisation de préparation de l'élastomère diénique modifié. Il comprend en outre une étape d'incorporation de la charge renforçante à l'élastomère diénique modifié et extrudé, de préférence sous la forme de granulés, dans un mélangeur interne. Ainsi comprend-il les étapes suivantes :

i. On mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère diénique,
ii. On extrude l'élastomère diénique modifié,
iii. On incorpore une charge renforçante à l'élastomère diénique modifié issu de l'étape ii) par un malaxage thermomécanique dans un mélangeur interne.

Une étape de granulation de l'élastomère diénique modifié peut suivre l'étape ii) et précéder l'étape iii) dans le procédé de préparation de la composition de caoutchouc.

L'étape d'incorporation de la charge renforçante à l'élastomère diénique modifié et extrudé peut être réalisée de façon connue de l'homme du métier et de façon conventionnelle en réalisant un malaxage thermomécanique à haute température (phase dite « non-productive »), jusqu'à une température maximale comprise entre 110°C et 200°C, de préférence entre 130°C et 185°C. Au cours de cette phase dite « non-productive » peuvent être aussi introduits dans le mélangeur interne tous les constituants nécessaires à la composition de caoutchouc à l'exception du système de réticulation. La durée totale du malaxage, dans cette phase non-productive, est de préférence comprise entre 2 et 10 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme article semi-fini pour pneumatique, tel qu'une bande de roulement pour pneumatique.

Les caractéristiques précitées de la présente invention, ainsi que d'autres, seront mieux comprises à la lecture de la description suivante des exemples de réalisation de l'invention, donnés à titre illustratif et non limitatif.

## II. EXEMPLES DE REALISATION DE L'INVENTION

### II.1-Exemples non conformes à l'invention :

Les élastomères diéniques modifiés ainsi que les compositions de caoutchouc les contenant sont préparés selon un procédé non conforme à l'invention, mais selon le procédé suivant décrit dans l'état de la technique, en l'espèce le document WO 2012007442.

Etape 1 : On introduit 150 kg d'élastomère diénique et une quantité visée de composé 1,3-dipolaire dans un mélangeur interne dont la température initiale de cuve est d'environ 50°C. On mélange par un malaxage thermomécanique pendant 2 minutes jusqu'à une température de 120°C.

Etape 2 : Dans le mélangeur interne contenant l'élastomère diénique modifié, on introduit la charge renforçante (silice, 60 pce ; noir de carbone N234 : 3 pce), l'agent de couplage (Si69, 6 pce) puis, après une à deux minutes de malaxage, les divers autres ingrédients (antioxydant : 3 pce ; paraffine : 1 pce ; acide stéarique : 2.5 pce ; ZnO : 3 pce) à l'exception du système de vulcanisation. On conduit alors un travail thermomécanique (phase non-productive) en une étape (durée totale du malaxage égale à environ 5 min), jusqu'à atteindre une température maximale de "tombée" de 160°C. On récupère la composition de caoutchouc ainsi obtenue (composition NC1).

Le composé 1,3-dipolaire utilisé est un composé dont le dipôle est un oxyde de nitrile, en l'espèce le 2,4,6-triméthyl-3-(2-(2-oxoimidazolidin-1-yl)éthoxy)benzonitroxide. L'élastomère diénique est un polyisoprène, grade Nipol 2200 de Nippon Zeon.

On reconduit le mode opératoire décrit ci-dessus pour fabriquer quatre autres compositions, respectivement NC2 à NC5.

II.2-Exemples selon l'invention :

Les élastomères diéniques modifiés ainsi que les compositions de caoutchouc les contenant sont préparés selon le procédé conforme à l'invention.

Etape a) : On introduit 200 kg d'élastomère diénique et une quantité visée de composé 1,3-dipolaire dans un mélangeur interne dont la température initiale de cuve est d'environ 50°C. On malaxe pendant environ 1 minute 30 jusqu'à obtenir une température de 160°C. On tombe l'élastomère diénique modifié.

Etape b) : On introduit l'élastomère diénique modifié dans une extrudeuse dont la température de consigne est de 30°C équipée à sa sortie d'une filière et d'un granulateur : on récupère des granulés.

Etape c) : On introduit environ 150 kg de granulés dans un mélangeur interne rempli à 70% et dont la température initiale de cuve est d'environ 50°C, on introduit la charge renforçante (silice, 60 pce ; noir de carbone N234 : 3 pce), l'agent de couplage (Si69, 6 pce) puis, après une à deux minutes de malaxage, les divers autres ingrédients (antioxydant : 3 pce ; paraffine : 1 pce ; acide stéarique : 2.5 pce ; ZnO : 3 pce) à l'exception du système de vulcanisation. On conduit alors un travail thermomécanique (phase non-productive) en une étape (durée totale du malaxage égale à environ 2'30 min), jusqu'à atteindre une température maximale de "tombée" de 170°C.

On récupère la composition de caoutchouc ainsi obtenu (composition C1).

Le composé 1,3-dipolaire utilisé est un composé dont le dipôle est un oxyde de nitrile, en l'espèce le 2,4,6-triméthyl-3-(2-(2-oxoimidazolidin-1-yl)éthoxy)benzonitroxide. L'élastomère diénique est un polyisoprène antioxydé, grade Nipol 2200 de Nippon Zeon.

On reconduit le mode opératoire décrit ci-dessus pour fabriquer deux autres compositions, respectivement C2 et C3.

II.3-Résultats :

On définit un taux visé, un taux réel de composé 1,3-dipolaire, un taux greffé, un rendement de greffage et une efficacité du procédé.

Le taux visé est la quantité de composé 1,3-dipolaire exprimée en mole pour 100 moles d'unité isoprène qui a été pesée et introduite dans le mélangeur interne à l'étape 1 pour NC1 à NC5, à l'étape a) pour C1 à C3 ;

Le taux réel est la quantité, déterminée par analyse de résonance magnétique nucléaire (RMN), de composé 1,3-dipolaire sous la forme greffée et non greffée sur l'élastomère diénique à l'issue de l'étape 2 pour NC1 à NC5, à l'issue de l'étape b) pour C1 à C3 ;

Le taux greffé correspond à la quantité, déterminée par analyse RMN, de composé 1,3-dipolaire sous la forme greffée sur l'élastomère diénique à l'issue de l'étape 2 pour NC1 à NC5, à l'issue de l'étape b) pour C1 à C3 ;

Le rendement de greffage est le ratio entre la quantité de composé 1,3-dipolaire greffée sur l'élastomère diénique et le taux réel ;

L'efficacité du procédé est le ratio entre la quantité de composé 1,3-dipolaire greffée sur l'élastomère diénique et le taux visé.

Ces grandeurs sont déterminées par analyse RMN sur les élastomères diéniques modifiés ou sur les compositions NC1 à NC5, C1 à C3 selon la méthode décrite ci-après.

Méthode d'analyse par RMN :

Les expériences RMN 1D $^{1}H$ utilisent une séquence simple impulsion avec un angle de basculement de 30°, le nombre de répétitions est de 128 scans avec un délai de recyclage de 5 secondes.

Les expériences RMN bidimensionnelles $^{1}H$ / $^{13}C$ sont des séquences de type HSQC (Heteronuclear Single Quantum Cohérence) et HMBC (Heteronuclear Multiple-Bond Correlation) pour les corrélations $^{1}H$ / $^{13}C$ à courte ($^{1}J$) et longue distance ($^{3}J$) respectivement. Les expériences sont réalisées à 25 °C.

Deux parties du même échantillon sont analysées :

- l'une brute (issue directement de la fin de la synthèse)
- et l'autre coagulée (dépourvue de toute molécule libre, notamment de composé 1,3-dipolaire non greffé).

Les déplacements chimiques sont calibrés par rapport à l'impureté protonée du $CDCl_3$ $\delta(^{1}H)$ = 7,20 ppm, référencée sur le TMS ($\delta(^{1}H)$ = 0,06 ppm).

Le schéma 1 illustre les motifs des unités isoprène modifiées par le greffage du composé 1,3-dipolaire, R représentant le reste de la chaîne polyisoprène.

Les déplacements chimiques caractéristiques des protons du composé 1,3-dipolaire greffé sur la chaîne polyisoprène (IR) figurent dans le tableau 1.

Les quantifications ont été effectuées à partir de l'intégration des spectres RMN 1D $^1$H à l'aide du logiciel d'acquisition des données.

Les massifs considérés pour la quantification sont :

- ✓ 1 proton de l'IR1-2 entre 5,8 ppm et 5,6 ppm,
- ✓ 1 proton de l'IR1-4 entre 5,4 et 4,7 ppm,
- ✓ 2 protons de l'IR3-4 entre 4,7 et 4,5 ppm,
- ✓ 8 protons du composé 1,3-dipolaire (4 $CH_2$) entre 3,9 et 3,3 ppm.

À l'aide de l'intégration du spectre RMN 1D $^1$H de la partie brute de l'échantillon : la quantification du motif de composé 1,3-dipolaire total sous la forme greffée et non greffée peut être réalisée en % motifs comme suit :

% motif total = intégrale $^1$H motif total x 100 / (intégrale $^1$H motif IR1-4 + intégrale $^1$H motif IR3-4 + intégrale $^1$H motif IR1-2).

À l'aide de l'intégration du spectre RMN 1D $^1$H de la partie coagulée de l'échantillon : la quantification du motif de composé 1,3-dipolaire greffé peut être réalisée en % motifs comme suit :

% motif greffé = intégrale $^1$H motif greffé x 100 / (intégrale $^1$H motif IR1-4 + intégrale $^1$H motif IR3-4 + intégrale $^1$H motif IR1-2).

Lorsque les analyses sont réalisées sur les compositions, un spectromètre Avance III HD 500 MHz Bruker équipé d'une sonde HR-MAS BBFO 1H-X 5 mm Bruker est utilisé. Les spectres sont acquis à des vitesses de rotation de 4000 à 5000 Hz. Dans ce cas, la préparation de l'échantillon est faite dans des rotors remplis avec la composition et un solvant deutéré permettant le gonflement, en général du chloroforme deutéré ($CDCl_3$). Les quantités d'échantillon utilisées sont ajustées de façon à obtenir des spectres avec une sensibilité et une résolution suffisantes.

Lorsque les analyses sont réalisées sur les élastomères (à l'issue des étapes 1 ou b), un spectromètre Avance III HD 500 MHz Bruker équipé d'une sonde « large bande » cryo-BBFO z-grad 5 mm Bruker est utilisé. Dans ce cas, 25 mg d'échantillon sont solubilisés dans 1 mL de chloroforme deutéré ($CDCl_3$) pour le verrouillage champ-fréquence.

Les résultats figurent dans le tableau 2.

Pour les exemples non conformes à l'invention, le taux réel est très inférieur au taux visé, ce qui traduit bien une perte de composé 1,3-dipolaire dans le procédé. Par ailleurs, les rendements de greffage varient dans une large mesure, puisqu'allant de 52% à 82%, ce qui démontre un manque de reproductibilité du procédé. On peut aussi noter que l'efficacité du procédé est faible (au plus 40%), si on calcule le rendement de greffage non pas sur la base du taux réel de composé 1,3-dipolaire, mais sur la base du taux visé.

Pour les exemples conformes à l'invention, le taux réel est quasi identique au taux visé et le rendement de greffage est très élevé (de l'ordre de 90%) et très peu fluctuant comparativement au procédé non conforme.

Il s'en suit que pour la modification de grosses quantités d'élastomère diénique par un composé 1,3-dipolaire, le procédé conforme à l'invention est beaucoup plus efficace que le procédé de l'état de la technique. Les granulés d'élastomère diénique modifié conformes à l'invention permettent de préparer des compositions de caoutchouc avec un coût plus faible en raison de l'efficacité du procédé de préparation de l'élastomère diénique modifié sous forme de granulés.

L'utilisation des granulés conformes à l'invention dans une composition de caoutchouc permet d'améliorer l'efficacité et la reproductibilité du procédé de fabrication des compositions de caoutchouc à base d'élastomère diénique et de composé 1,3-dipolaire, en raison de l'absence de fluctuation du taux de greffage de l'élastomère diénique dans le procédé de modification de l'élastomère. Le taux de greffage étant non fluctuant, les changements de propriétés des compositions de caoutchouc apportés par la modification de l'élastomère sont davantage sous contrôle et donc davantage reproductibles.

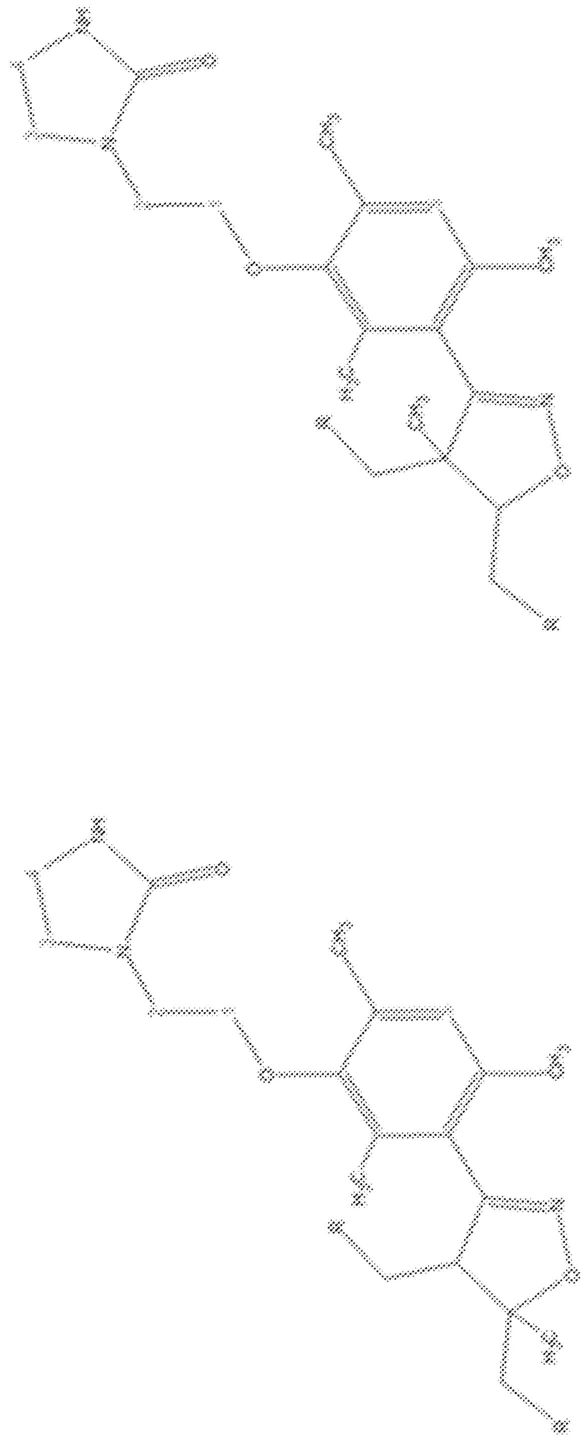

Schéma 1 :

Tableau 1

| δ $^1$H (ppm) | Motif |
|---|---|
| 6,81 | CH n°5 |
| 3,39 | $CH_2$ n°4 |

(suite)

| δ $^1$H (ppm) | Motif |
|---|---|
| 3,65 | $CH_2$ n°3 |
| 3,51 | $CH_2$ n°2 |
| 3,78 | $CH_2$ n°1 |

Tableau 2

| composition | NC1 | NC2 | NC3 | NC4 | NC5 | C1 | C2 | C3 |
|---|---|---|---|---|---|---|---|---|
| Taux visé (% mol) | 0.30 | 0.30 | 0.30 | 0.30 | 0.30 | 0.15 | 0.15 | 0.15 |
| Taux introduit réel (%mol) | 0.17 | 0.14 | 0.16 | 0.15 | 0.08 | 0.15 | 0.14 | 0.15 |
| Rendement de greffage (%) | 59 | 82 | 52 | 67 | 75 | 92 | 93 | 87 |
| Efficacité du procédé (%) | 33 | 40 | 30 | 33 | 40 | 92 | 87 | 87 |

**Revendications**

**1.** Procédé de préparation d'un élastomère diénique modifié par un composé 1,3-dipolaire, **caractérisé en ce qu'**il comprend les étapes suivantes :

a. On mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère diénique,
b. On extrude l'élastomère diénique modifié.

**2.** Procédé selon la revendication 1 dans lequel dans l'étape a) on malaxe l'élastomère diénique et le composé 1,3-dipolaire jusqu'à atteindre une température maximum de mélangeage allant de 110 à 180°C, préférentiellement comprise entre 140 et 170°C.

**3.** Procédé selon l'une quelconque des revendications 1 à 2 dans lequel la température de consigne de l'extrudeuse n'excède pas 40°C.

**4.** Procédé selon l'une quelconque des revendications 1 à 3 dans lequel le dipôle du composé 1,3-dipolaire est un oxyde de nitrile.

**5.** Procédé selon la revendication 4 dans lequel le composé 1,3-dipolaire comprend un noyau benzénique substitué par le dipôle oxyde de nitrile.

**6.** Procédé selon la revendication 5 dans lequel le noyau benzénique est substitué en ortho du dipôle.

**7.** Procédé selon l'une quelconque des revendications 1 à 6 dans lequel le composé 1,3-dipolaire contient un groupe contenant un hétérocycle diazoté et carbonylé à 5 membres, de préférence le groupe 2-oxoimidazolidin-1-yle.

**8.** Procédé selon l'une quelconque des revendications 1 à 7 dans lequel l'élastomère diénique est choisi dans le groupe constitué par les polybutadiènes, les polyisoprènes, les copolymères de butadiène, les copolymères d'isoprène et leurs mélanges.

**9.** Procédé selon l'une quelconque des revendications 1 à 8 dans lequel l'élastomère diénique est un polyisoprène comprenant plus de 90% en mole de liaison 1,4-cis, de préférence de synthèse.

**10.** Procédé selon l'une quelconque des revendications 1 à 9 dans lequel l'élastomère diénique contient un antioxydant.

**11.** Procédé selon l'une quelconque des revendications 1 à 10 dans lequel l'étape b) est suivie d'une étape de granulation

de l'élastomère diénique modifié.

**12.** Procédé de préparation d'une composition de caoutchouc à base d'un élastomère diénique modifié par un composé 1,3-dipolaire et d'une charge renforçante qui comprend les étapes suivantes :

i. On mélange par un malaxage thermomécanique un élastomère diénique et un composé 1,3-dipolaire dans un mélangeur interne pour former un élastomère diénique modifié par réaction de greffage du composé 1,3-dipolaire sur l'élastomère diénique,
ii. On extrude l'élastomère diénique modifié,
iii. On incorpore une charge renforçante à l'élastomère diénique modifié issu de l'étape ii) par un malaxage thermomécanique dans un mélangeur interne.

**13.** Procédé selon la revendication 12 dans lequel une étape de granulation de l'élastomère diénique modifié suit l'étape ii) et précède l'étape iii).

**14.** Granulé d'élastomère diénique modifié par une réaction de greffage d'un composé 1,3-dipolaire susceptible d'être obtenu par le procédé défini selon la revendication 11.

**15.** Utilisation de granulés d'élastomère diénique modifié définis selon la revendication 14 dans une composition de caoutchouc comprenant une charge renforçante.

**Patentansprüche**

**1.** Verfahren zur Herstellung eines mit einer 1,3-dipolaren Verbindung modifizierten Dienelastomers, **dadurch gekennzeichnet, dass** es die folgenden Schritte umfasst:

a. Mischen eines Dienelastomers und einer 1,3-dipolaren Verbindung durch thermomechanisches Kneten in einem Innenmischer zur Bildung eines durch eine Aufpfropfungsreaktion der 1,3-dipolaren Verbindung auf das Dienelastomer modifizierten Dienelastomers,
b. Extrudieren des modifizierten Dienelastomers.

**2.** Verfahren nach Anspruch 1, bei dem man in Schritt a) das Dienelastomer und die 1,3-dipolare Verbindung bis zum Erreichen einer maximalen Mischtemperatur im Bereich von 110 bis 180 °C, bevorzugt zwischen 140 und 170 °C, knetet.

**3.** Verfahren nach einem der Ansprüche 1 bis 2, bei dem die Solltemperatur des Extruders nicht über 40 °C liegt.

**4.** Verfahren nach einem der Ansprüche 1 bis 3, bei dem es sich bei dem Dipol der 1,3-dipolaren Verbindung um ein Nitriloxid handelt.

**5.** Verfahren nach Anspruch 4, bei dem die 1,3-dipolare Verbindung einen durch den Nitriloxid-Dipol substituierten Benzolkern umfasst.

**6.** Verfahren nach Anspruch 5, bei dem der Benzolkern in ortho-Position zum Dipol substituiert ist.

**7.** Verfahren nach einem der Ansprüche 1 bis 6, bei dem die 1,3-dipolare Verbindung eine Gruppe mit einem 5-gliedrigen carbonylierten Di-Stickstoff-Heterocyclus, vorzugsweise die 2-Oxoimidazolidin-1-yl-Gruppe, enthält.

**8.** Verfahren nach einem der Ansprüche 1 bis 7, bei dem das Dienelastomer aus der Gruppe bestehend aus Polybutadienen, Polyisoprenen, Butadien-Copolymeren, Isopren-Copolymeren und Mischungen davon ausgewählt wird.

**9.** Verfahren nach einem der Ansprüche 1 bis 8, bei dem es sich bei dem Dienelastomer um ein Polyisopren mit mehr als 90 Mol-% 1,4-cis-Bindungen, das vorzugsweise synthetisch ist, handelt.

**10.** Verfahren nach einem der Ansprüche 1 bis 9, bei dem das Dienelastomer ein Antioxidans enthält.

**11.** Verfahren nach einem der Ansprüche 1 bis 10, bei dem auf Schritt b) ein Schritt der Granulation des modifizierten

Dienelastomers folgt.

**12.** Verfahren zur Herstellung einer Kautschukzusammensetzung auf Basis eines durch eine 1,3-dipolare Verbindung modifizierten Dienelastomers und eines verstärkenden Füllstoffs, das die folgenden Schritte umfasst:

i. Mischen eines Dienelastomers und einer 1,3-dipolaren Verbindung durch thermomechanisches Kneten in einem Innenmischer zur Bildung eines durch eine Aufpfropfungsreaktion der 1,3-dipolaren Verbindung auf das Dienelastomer modifizierten Dienelastomers,
ii. Extrudieren des modifizierten Dienelastomers,
iii. Einarbeiten eines verstärkenden Füllstoffs in das modifizierte Dienelastomer aus Schritt ii) durch thermomechanisches Mischen in einem Innenmischer.

**13.** Verfahren nach Anspruch 12, bei dem ein Schritt der Granulation des modifizierten Dienelastomers auf Schritt ii) folgt und Schritt iii) vorausgeht.

**14.** Granulat von durch eine Aufpfropfungsreaktion einer 1,3-dipolaren Verbindung modifiziertem Dienelastomer, das durch das Verfahren gemäß Anspruch 11 erhältlich ist.

**15.** Verwendung von Granulat von modifiziertem Dienelastomer gemäß Anspruch 14 in einer Kautschukzusammensetzung, die einen verstärkenden Füllstoff umfasst.

## Claims

**1.** Process for the preparation of a diene elastomer modified by a 1,3-dipolar compound, **characterized in that** it comprises the following stages:

a. a diene elastomer and a 1,3-dipolar compound are mixed by thermomechanical kneading in an internal mixer in order to form a diene elastomer modified by a reaction of grafting the 1,3-dipolar compound to the diene elastomer,
b. the modified diene elastomer is extruded.

**2.** Process according to Claim 1, in which, in stage a), the diene elastomer and the 1,3-dipolar compound are kneaded until a maximum compounding temperature ranging from 110 to 180°C, preferably of between 140 and 170°C, is reached.

**3.** Process according to either one of Claims 1 and 2, in which the set temperature of the extruder does not exceed 40°C.

**4.** Process according to any one of Claims 1 to 3, in which the dipole of the 1,3-dipolar compound is a nitrile oxide.

**5.** Process according to Claim 4, in which the 1,3-dipolar compound comprises a benzene ring substituted by the nitrile oxide dipole.

**6.** Process according to Claim 5, in which the benzene ring is substituted in the position ortho to the dipole.

**7.** Process according to any one of Claims 1 to 6, in which the 1,3-dipolar compound contains a group containing a 5-membered dinitrogenous and carbonylated heterocycle, preferably the 2-oxoimidazolidin-1-yl group.

**8.** Process according to any one of Claims 1 to 7, in which the diene elastomer is selected from the group consisting of polybutadienes, polyisoprenes, butadiene copolymers, isoprene copolymers and their mixtures.

**9.** Process according to any one of Claims 1 to 8, in which the diene elastomer is a polyisoprene comprising more than 90 mol% of cis-1,4 bonding, preferably a synthetic polyisoprene.

**10.** Process according to any one of Claims 1 to 9, in which the diene elastomer contains an antioxidant.

**11.** Process according to any one of Claims 1 to 10, in which stage b) is followed by a stage of granulation of the modified diene elastomer.

**12.** Process for the preparation of a rubber composition based on a diene elastomer modified by a 1,3-dipolar compound and on a reinforcing filler which comprises the following stages:

i. a diene elastomer and a 1,3-dipolar compound are mixed by thermomechanical kneading in an internal mixer in order to form a diene elastomer modified by a reaction of grafting the 1,3-dipolar compound to the diene elastomer,
ii. the modified diene elastomer is extruded,
iii. a reinforcing filler is incorporated in the modified diene elastomer resulting from stage ii) by thermomechanical kneading in an internal mixer.

**13.** Process according to Claim 12, in which a stage of granulation of the modified diene elastomer follows stage ii) and precedes stage iii).

**14.** Granule of diene elastomer modified by a reaction of grafting a 1,3-dipolar compound capable of being obtained by the process defined according to Claim 11.

**15.** Use of granules of modified diene elastomer which are defined according to Claim 14 in a rubber composition comprising a reinforcing filler.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012007442 A
- WO 2015059271 A
- WO 2015177105 A
- WO 2005028526 A
- WO 2004035639 A
- WO 2007054224 A
- WO 2007121936 A
- WO 2008055683 A
- WO 2009138460 A
- WO 2012007441 A
- WO 2006045088 A